# EUROPÄISCHE PATENTSCHRIFT

(11) **EP 2 948 264 B1**
(45) Veröffentlichungstag und Bekanntmachung des Hinweises auf die Patenterteilung: **25.04.2018**
(21) Anmeldenummer: 13745429.4
(22) Anmeldetag: 07.08.2013
(51) Int. Cl.: B23D 61/02

(54) **SÄGEBLATT MIT INTEGRIERTEM SPANRAUM**
SAW BLADE HAVING INTEGRATED SWARF SPACE
LAME DE SCIE À LOGEMENT DE COPEAUX INTÉGRÉ

(30) Priorität: 28.01.2013 DE 102013201291
(43) Veröffentlichungstag der Anmeldung: 02.12.2015
(73) Patentinhaber: Albert Knebel Holding GmbH, 72336 Balingen (DE)
(72) Erfinder: KNEBEL, Alexander, 72336 Balingen (DE)
(74) Vertreter: Kohler Schmid Möbus Patentanwälte
(86) Internationale Anmeldenummer: PCT/EP2013/066519
(87) Internationale Veröffentlichungsnummer: WO 2014/114368

(56) Entgegenhaltungen:
- EP-A1- 1 872 918
- DE-U1- 20 019 885
- JP-A- H11 277 330
- US-A- 3 938 417
- US-A- 4 135 421
- US-A- 4 515 055

## Beschreibung

Die Erfindung betrifft ein Sägeblatt mit einem Sägeblattkörper und mehreren regelmäßig oder unregelmäßig entlang eines Zahnträgerbereichs des Sägeblatts verteilten Schneidenzähnen. Kreissägeblätter und Bandsägenblätter sind grundsätzlich seit langem bekannt. Es sind Sägeblätter mit unterschiedlichsten Schneidenzahnformen und an den Zähnen angebrachten Schneiden bekannt. Üblicherweise befindet sich unterhalb eines Schneidenzahns ein Spanraum, durch den ein erzeugter Span aufgenommen und abgeführt wird. Ein Blockieren des Sägeblatts im Betrieb soll dadurch verhindert werden.

Aus der EP 1 872 918 A1 ist ein Sägeblatt gemäß dem Oberbegriff des Anspruchs 1 bekannt. Das Sägeblatt soll als Keil auf das zu sägende Holz wirken.
Aus der US 3,938,417 ist ein Kreissägeblatt bekannt, bei dem die Sägezähne einen dickenreduzierten Bereich aufweisen und an den Sägezähnen Schneiden vorgesehen sind, die breiter sind als ein Sägeblattkörper.
Problematisch an bekannten Sägeblättern ist, dass die Schneidenzähne nicht sehr biegesteif sind und aufgrund von Luftwirbelbildung Geräusche entstehen, die unerwünscht sind. Durch axiale Schwingungen entsteht zudem eine unsaubere, riefige Schnittoberfläche.

Aufgabe der vorliegenden Erfindung ist es, ein Sägeblatt bereitzustellen, welches diesbezüglich Verbesserungen aufweist.

Gelöst wird diese Aufgabe erfindungsgemäß durch ein Sägeblatt mit den Merkmalen des Anspruchs 1. Dies führt dazu, dass die Form der Zähne sehr flach und niedrig gehalten werden kann. Unterhalb des Schneidenzahns ist kein Spanraum im Sinne eines Freiraums oder Durchbruchs vorhanden und notwendig, wie dies bei bekannten Kreissägeblattausführungen üblich ist. Hierdurch ergibt sich ein sehr biegesteifer Zahn und durch die geschlossene Form ein geräuscharmer Lauf des Sägeblatts, da eine Geräusche verursachende Luftwirbelbildung des insbesondere drehenden Sägeblatts weitgehend reduziert wird. Das Sägeblatt kann als Kreissägeblatt oder Bandsägeblatt ausgebildet sein. Im Falle eines Kreissägeblatts stellt der Zahnträgerbereich einen Umfangsbereich dar und die Zähne sind über den Umfang des Kreissägeblatts verteilt.

Der in der Dicke reduzierte Zahnträgerbereich nimmt das von den unmittelbar darüber positionierten Schneidenzähnen erzeugte Spanmaterial auf, sodass bei dieser Ausführung ein zweigeteilter Spanraum vorhanden ist: einmal der Raum hinter dem Zahnrücken, wie bei üblichen Sägeblättern, und zudem der unterhalb des Zahnes im Bereich der Dickenreduzierung vorhandene Raum. Mit dem erfindungsgemäßen Sägeblatt ergibt sich als ergänzender Vorteil ein erheblich leiseres Laufgeräusch, insbesondere im Leerlaufbetrieb, durch weitgehende Vermeidung von Luftwirbelbildung. Weiterhin ergibt sich insbesondere bei einem Kreissägeblatt eine automatische Spandickenbegrenzung durch die weitgehend geschlossene Umfangskontur des Sägeblatts. Dadurch wird ein ungewolltes Einziehen des Werkzeugs in den Schnitt vermieden. Es ist somit auch für manuellen Vorschub geeignet.

Es kommt zu einer deutlich reduzierten so genannten Mehrfachzerspanung der Späne, da die Späne unmittelbar nach dem Schneiden aus dem Kontaktbereich der Schneide in den darunter liegenden abgesetzten (dickenreduzierten) Bereich abgeleitet werden. Der verminderte Kontakt zwischen Schneiden und Spanmaterial bewirkt eine reduzierte Verschleißbelastung der Schneiden und damit eine verbesserte Standzeit.

Aufgrund der kurzen, biegesteifen Schneidenzahnform ergibt sich eine sehr gute Schnittqualität. Typische Riefenbildungen auf den Werkstückoberflächen werden, bedingt durch die Sägekörpergestaltung, deutlich reduziert, was einen weiteren Vorteil der vorliegenden Sägeblattausführung darstellt.

An den Schneidenzähnen können Schneiden angebracht sein, wobei die Schneiden mit einem Schneidstoff versehen sein können, der eine höhere Härte aufweist als der Sägeblattkörper. Der Schneidstoff kann aus Hartmetall, polykristallinem Diamant (PKD), gehärtetem Stahl, Stellit oder einem anderen geeigneten Hartstoff bestehen.

Vorzugsweise wird ein Schneidstoff wie PKD (polykristalliner Diamant) eingesetzt, da hier keine Schleifbearbeitung an der Zahnfrontfläche (Spanfläche) erfolgen muss.

Der Schneidstoff kann durch Löten, Kleben, Schweißen oder mittels eines anderen geeigneten Verfahrens mit dem Sägeblattkörper, insbesondere den Schneidenzähnen, verbunden sein. Der Schneidstoff und ein kreisringförmiger Bereich am Sägeblattumfang, insbesondere der in der Dicke reduzierte Bereich, kann zusätzlich mit einer Hartstoffbeschichtung versehen sein. Diese Beschichtung kann als Monolayer, Multilayer, Gradientenschicht, Compositeaufbau oder in anderer geeigneter Art ausgeführt sein.

Dabei versteht man unter einem Monolayer eine Beschichtung, die aus einer Schichtlage besteht. Entsprechend versteht man unter einem Multilayer eine Beschichtung aus mehreren Lagen ein und desselben Schichtmaterials oder aus mehreren Lagen unterschiedlicher, auch wechselweise aufgebrachter Beschichtungsmaterialien. Unter einer Gradientenschicht versteht man die Beschichtung mit Schichtmaterial, bestehend aus mindestens zwei verschiedenen Komponenten, wobei sich das Mischungsverhältnis bzw. die Anteile der einzelnen Komponenten innerhalb der Schichtdicke kontinuierlich und stufenlos verändern. Unter einem Compositeaufbau versteht man eine Beschichtung mit in der Regel einer gitterartigen tragenden Struktur im atomaren oder molekularen Bereich und Einlagerung einer oder mehrerer weiterer Komponenten in diese Struktur.

Die Schneiden können eine beliebige Geometrie aufweisen.

Vorzugsweise ist das Sägeblatt in so genannter Dünnschnittausführung ausgelegt. Sägeblätter in Dünnschnittausführung weisen eine im Verhältnis zum Durchmesser schmale (dünne) Schnittbreite und einen verhältnismäßig dünnen Sägeblattkörper auf. Aufgrund dieser Eigenschaft kommt es zu einer Energieeinsparung durch eine schmale Schnittbreite und dadurch weniger erforderliche Antriebsleistung. Außerdem kommt es zu weniger Verschnitt / weniger Späneabfall durch eine geringere Schnittbreite. Dies führt zu einer Materialeinsparung.

Im Vergleich zu Sägeblättern in konventioneller Ausführung (d. h. mit herkömmlicher Gestaltung des Spanraums) können die erfindungsgemäßen Sägeblätter dünner ausgeführt werden, d. h. mit einer kleineren Schnittbreite.

Das erfindungsgemäße Sägeblatt kann als Einwegsägeblatt ohne Nachschärfmöglichkeit oder alternativ als Sägeblatt, welches zur Nachschärfung geeignet ist, ausgelegt sein.

Gemäß einer besonders bevorzugten Ausführungsform kann der Sägeblattkörper einseitig oder beidseitig zumindest abschnittsweise eine insbesondere kreisringförmige Absetzung aufweisen, sodass der Sägeblattkörper in diesem Bereich eine geringere Dicke aufweist. Die insbesondere kreisringförmige Absetzung kann auch durchgehend ausgebildet sein. Mit anderen Worten bedeutet dies, dass der Sägeblattkörper im Bereich seines Umfangs oder Zahnträgerbereichs zumindest in einem Abschnitt auf zumindest einer Seite eine Art Stufe aufweist, in der der Sägeblattkörper in der Dicke reduziert ist.

Alternativ oder zusätzlich kann vorgesehen sein, dass der Sägeblattkörper zumindest abschnittsweise unterhalb der Schneidenzähne einseitig oder beidseitig einzelne Taschen aufweist, sodass der Sägeblattkörper im Bereich der Taschen eine geringere Dicke aufweist. Der Sägeblattkörper kann somit auf einer oder auf beiden Seiten im Zahnträgerbereich eine oder mehrere Ausnehmungen aufweisen. Die Ausnehmung kann zumindest abschnittsweise durchgehend, insbesondere kreisringförmig, sein, oder zumindest abschnittsweise können taschenförmige Ausnehmungen vorgesehen sein. Es ist auch denkbar, ausschließlich taschenförmige Ausnehmungen vorzusehen oder ausschließlich eine durchgehende, insbesondere kreisringförmige, Absetzung vorzusehen. Auch ist es denkbar, auf einer Seite des Sägeblatts als Taschen ausgebildete Ausnehmungen vorzusehen und auf der gegenüberliegenden Seite des Sägeblatts eine durchgehende Absetzung vorzusehen.

Die Breite des dickenreduzierten Zahnträgerbereichs kann bis zu einem Drittel des Sägeblattdurchmessers betragen, vorzugsweise beträgt die Breite des abgesetzten (dickenreduzierten) Bereichs jedoch 5 bis 10 % vom Durchmesserwert bei Kreissägeblättern. Dadurch wird sichergestellt, dass das Sägeblatt eine ausreichende Stabilität aufweist.

Gemäß einer Ausgestaltung der Erfindung kann vorgesehen sein, dass die Dicke des Sägeblattkörpers im Zahnträgerbereich größer ist als ein Drittel der Dicke des Sägeblattkörpers außerhalb des Zahnträgerbereichs. Insbesondere kann vorgesehen sein, dass auf jeder Seite des Sägeblatts die Ausnehmung des Sägeblattkörpers maximal ein Drittel der Sägeblattdicke beträgt. Die Tiefe des Zahnträgerbereichs bzw. der Ausnehmung des Sägeblattkörpers auf beiden Seiten kann gleich sein oder unterschiedlich tief sein. Insbesondere ist es denkbar, nur auf einer Seite des Sägeblatts eine Ausnehmung im Zahnträgerbereichs vorzusehen. Bevorzugt ist es jedoch, wenn auf zwei Seiten, d. h. beidseitig, der Sägeblattkörper in einem Zahnträgerbereich ausgenommen ist. Die Ausnehmung ist dabei allerdings lediglich eine Dickenreduzierung. Es sollen in der Regel keine Schlitze oder Durchgangslöcher im Zahnträgerbereich vorhanden sein.

In dem Zahnträgerbereich mit reduzierter Dicke des Sägeblattkörpers können Flächen vorgesehen sein, die gegenüber einer Sägeblattmittenebene geneigt sind. Insbesondere können die als Spanraum unterhalb der Schneidenzähne eingearbeiteten Ausnehmungen als beidseitig durchgehende, insbesondere ringförmige Ausnehmungen oder als einzelne Taschen auch mit zur Sägeblattmittenebene geneigten Flächen ausgestaltet sein. Im Falle geneigter Flächen kann der Zahnträgerbereich somit zur Sägeblattmitte hin mit abnehmender oder umgekehrt mit zunehmender Dicke des Sägeblattkörpers ausgeführt sein. Die geneigten Flächen beginnen vorzugsweise unterhalb einer am äußersten Sägeblattrand bzw. -umfang ausgebildeten, später noch zu erläuternden, dachförmigen Abschrägung oder Fase.

Weiterhin ist es denkbar, dass in dem Zahnträgerbereich mit reduzierter Dicke des Sägeblattkörpers Flächen vorgesehen sind, die parallel zu einer Sägeblattmittenebene ausgerichtet sind. Auch eine Kombination geneigter und paralleler Flächen ist denkbar. Insbesondere kann der Umfangsbereich aus geneigten und parallel zur Sägeblattebene verlaufenden Flächenanteilen zusammengesetzt sein.

Die Flächen auf sich bezüglich einer Sägeblattmittenebene gegenüberliegenden Seiten können zur Sägeblattmittenebene asymmetrisch ausgeführt sein. Insbesondere bei ganz oder teilweise geneigten Flächen können die Breite und Tiefe dieser Ausnehmungen im Zahnträgerbereich des Sägeblattkörpers einseitig oder beidseitig unterschiedlich breit oder unterschiedlich tief, d. h. zur Sägeblattmittenebene asymmetrisch, ausgeführt sein.

Gemäß einer bevorzugten Ausführungsform können am Rand bzw. Umfang des Sägeblatts Schrägen oder Fasen vorgesehen sein. Insbesondere können an den Schneidenzähnen, insbesondere den Rücken der Schneidenzähne, Fasen oder Schrägen vorgesehen sein. Die Fasen oder Schrägen können insbesondere dachförmig, d. h. beidseitig, vorgesehen sein. Insbesondere können die Schneiden und/oder der äußerste Rand oder Umfang des Sägeblattkörpers durch Schrägen bzw. Fasen so geformt sein, dass die anfallenden Späne beim Sägen geteilt und beidseitig unterhalb der Schneiden in dem dickenreduzierten Zahnträgerbereich geführt werden, von wo die Späne dann beim Austritt aus der Werkstückkontur wie üblich vom Sägeblatt insbesondere durch Fliehkraftwirkung weggeschleudert werden. Durch das Vorsehen von Fasen an Kanten im Umfangs- oder Randbereich kann somit die Spanleitung und Spanabfuhr unterstützt werden.

Die Schrägen oder Fasen können sich in durchgehenden Linien- oder Flächenverläufen bis in den Sägeblattkörper erstrecken, sodass am äußeren Rand oder Umfang hinter den Schneiden der Sägeblattkörper ebenfalls dachförmige Flächen oder Fasen aufweisen kann.

Die Schrägen oder Fasen können sich bis in den dickenreduzierten Bereich erstrecken. Es ist jedoch auch denkbar, dass sich die Schrägen oder Fasen bis in den nicht dickenreduzierten Bereich erstrecken.

Weitere Vorteile ergeben sich, wenn sich eine im Außenumfang oder Rand des Sägeblatts vorgesehene Schräge oder Fase bis hinter eine Schneide des nächstliegenden Schneidenzahns erstreckt, auch bei wahlweisem Vorhandensein einer Einkerbung des Zahnrückens. Insbesondere kann die Schräge oder Fase so geführt werden, dass die dadurch beidseitig gebildeten, zur Sägeblattmitte hin geneigten Flächen erst hinter der Frontfläche der nachfolgenden Schneide auslaufen. Geeigneterweise werden diese dachförmig abgeschrägten Flächen vor der Bestückung des Sägeblattkörpers mit Schneiden durch Schleifen angebracht. Durch diese Ausführung wird ein Ableiten des Spanvolumens aus dem Bereich der Schneiden nach unten, d. h. zur Sägeblattmitte hin, ohne Aufstauen des Spanmaterials am unteren Ende der Spanfläche erreicht.

Ein weiterer Vorteil ergibt sich auch durch den Einsatz von Kühlschmierstoffen, dabei wird der Späneflug verlangsamt und der Abtransport in die seitlich dickenreduzierten Bereiche (Spanraumflächen) begünstigt.

An den Schneidenzähnen sind Schneiden angeordnet, wobei der seitliche Schneidenüberstand mehr als 0 mm und bis zu 1,0 mm gegenüber dem Sägeblattkörper, der nicht in der Dicke reduziert ist, beträgt. Dadurch kann ein Blockieren des Sägeblatts im Schnittspalt vermieden werden.

Der Sägeblattkörper kann als geschlossene Fläche, d. h. ohne so genannte Dehnungsschlitze am Sägeblattumfang, und ohne Dämpfungsornamente innerhalb des Sägeblattkörpers ausgeführt sein. Es ist jedoch auch denkbar, als Sonderform Dehnungsschlitze und Ornamente oder auch nur Dehnungsschlitze oder nur Ornamente vorzusehen.

Beim Vorhandensein von Dehnungsschlitzen und/oder Ornamenten werden diese vorzugsweise mittels Laserschnitten eingebracht und können mit oder ohne Ausfüllung mit einem geeigneten elastischen, dehnbaren Material ausgeführt sein.

Der Außenumfang oder der Rand des Sägeblatts kann eine, insbesondere u- oder v-förmige, Einkerbung aufweisen. Eine solche Ausgestaltung kann aus fertigungstechnischen Gründen vorteilhaft sein. Bei der Einkerbung kann es sich insbesondere um eine Auslaufzone eines Erodierwerkzeugs oder einer Schleifscheibe beim Fertigbearbeiten der befestigten, z. B. eingelöteten oder eingeklebten, Schneide am äußeren Umfang (= Zahnrückenbereich) handeln.

Gemäß einer weiteren Ausgestaltung kann vorgesehen sein, dass die Frontflächen der Schneidenzähne oder der Schneiden einen Achswinkel β im Bereich 0 < β ≤ 45° aufweisen. Dies bedeutet, dass die Frontflächen der Schneidenzähne bzw. der Schneiden, d. h. die in Bewegungsrichtung des Sägeblatts nach vorn zeigenden Seiten der Schneidenzähne bzw. der Schneiden, von einer rechtwinkligen Lage zur Sägeblattmittenebene nach links oder rechts geneigt abweichen können. Diese Anordnung ist als so genannter Achswinkel bekannt. Der Winkel zwischen Frontfläche der Schneidenzähne bzw. der Schneiden und einer Senkrechten zu der Sägeblattmittenebene beträgt vorzugsweise zwischen 0 und 45°. Die Ausrichtung der Frontflächen kann dabei abwechselnd nach links und rechts weisen oder so ausgeführt sein, dass alle Frontflächen nur nach links oder nur nach rechts geneigt sind. Denkbar sind jedoch auch beliebige Kombinationen von nach links geneigten, nach rechts geneigten und nicht nach einer Seite geneigten Frontflächen.

Der Sägeblattkörper kann unmittelbar vor zumindest einem Schneidenzahn oder zumindest einer Schneide eine Vertiefung aufweisen. Dies bedeutet, dass das Sägeblatt unmittelbar vor zumindest einem Schneidenzahn oder unmittelbar vor zumindest einer Schneide eine höhen- oder umfangsreduzierende Vertiefung aufweisen kann. Diese Vertiefung oder Aussparung kann als Zuführraum für die an der Schneide bzw. Frontfläche der Schneide oder des Schneidenzahns entstehenden Späne in die unterhalb der Schneidenzähne angebrachten seitlichen Dickenreduzierungen des Sägeblattkörpers dienen, weiche erfindungsgemäß als integrierter Spanraum zur Aufnahme und zum Abtransport der Späne dienen. Die Form des Zuführraums, d. h. der Aussparung bzw. Vertiefung, kann annähernd halbkreisförmig, annähernd u-förmig oder annähernd v-förmig ausgebildet sein.

Weitere Merkmale und Vorteile der Erfindung ergeben sich aus der nachfolgenden Beschreibung eines Ausführungsbeispiels der Erfindung.

Es zeigen:
- Fig. 1: eine Draufsicht auf ein Kreissägeblatt;
- Fig. 2: eine vergrößerte Darstellung im Bereich des Umfangs des Kreissägeblatts;
- Fig. 3: eine Schnittdarstellung durch den Randbereich des Kreissägeblatts;
- Fig. 4a: eine vergrößerte Darstellung im Bereich des Umfangs des Kreissägeblatts zur Darstellung von eingebrachten Taschen;
- Fig. 4b: eine vergrößerte Darstellung im Bereich des Umfangs des Kreissägeblatts zur Darstellung einer besonderen Gestaltung eines Zahnrückenbereichs;
- Fig. 4c: eine Variante der Ausführungsform gemäß der Fig. 4b;
- Fig. 5: eine vergrößerte Darstellung im Bereich des Umfangs des Kreissägeblatts mit einer v-förmigen Vertiefung im Zahnrückenbereich;
- Fig. 6: eine Draufsicht von oben auf ein Kreissägeblatt zur Darstellung unterschiedlicher Achswinkel;
- Fig. 7: einen Ausschnitt eines Kreissägeblatts zur Darstellung einer Ausnehmung vor einer Frontfläche einer Schneide;
- Fig. 8: eine Ausführungsform eines Sägeblatts mit speziell gestalteter Kontur vor der Frontfläche einer Schneide.

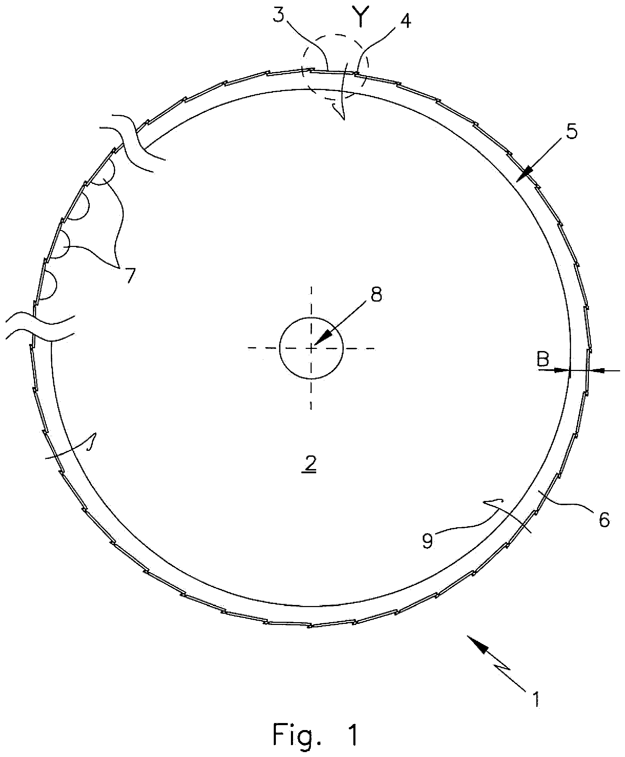

Die Fig. 1 zeigt ein Kreissägeblatt 1 mit einem Sägeblattkörper 2, an dessen Umfang Schneidenzähne 3 vorgesehen sind, an denen Schneiden 4 angeordnet sind. Die Schneiden 4 können aus vergleichsweise hartem Material ausgebildet sein. Im Bereich des Umfangs weist der Sägeblattkörper 2 in einem Zahnträgerbereich 5 oder Umfangsbereich eine Dickenreduzierung auf. Insbesondere kann der Sägeblattkörper 2 auf einer oder auf beiden Seiten eine Ausnehmung, Vertiefung oder Absetzung aufweisen. In der gezeigten Darstellung ist der Zahnträgerbereich 5 in einem Abschnitt als kreisringförmige Absetzung 6 ausgebildet. Die Breite der kreisringförmigen Absetzung 6, die auf der gezeigten Seite und auch auf der gegenüberliegenden Seite vorgesehen sein kann, beträgt B. Die Breite B beträgt weniger als ein Drittel des Durchmessers des Kreissägeblatts 1.

In einem anderen Bereich sind ebenfalls im Zahnträgerbereich taschenartige Ausnehmungen 7 vorgesehen, die sich unterhalb der Schneidenzähne 3 befinden. Der Zahnträgerbereich 5 stellt einen Spanraum dar, der jedoch keine Durchgangsöffnung des Sägeblattkörpers 2 aufweist. Es sind beliebige Kombinationen von durchgehenden, insbesondere kreisringförmigen, Ausnehmungen 6 und taschenförmigen Ausnehmungen 7 über den Randbereich bzw. Umfang und auch auf den beiden Seiten des Kreissägeblatts 1 verteilt denkbar. Der Zahnträgerbereich 5 muss auch keine konstante Dicke aufweisen. Die Dicke des Zahnträgerbereichs 5 kann variieren. Insbesondere kann der Zahnträgerbereich 5 sich in Richtung Mittelpunkt 8 verjüngen oder verdicken. Dies kann beispielsweise dadurch erreicht werden, dass im Zahnträgerbereich 5 unterschiedliche Flächen, insbesondere bezüglich einer Sägeblattkörpermittenebene geneigte Flächen, vorgesehen sind. Mit der Bezugsziffer 9 sind Dehnungsschlitze gekennzeichnet.

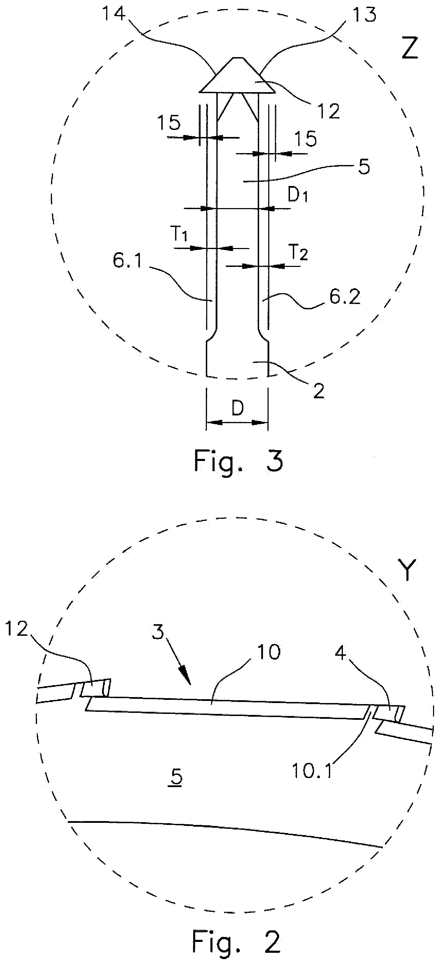

Der Fig. 2 kann man entnehmen, dass im Bereich des äußeren Umfangs der Schneidenzahn 3, insbesondere dessen Rücken, eine Schräge 10 oder Fase aufweist. Darunter befindet sich der dickenreduzierte Zahnträgerbereich 5. Eine Schräge 10 kann auch auf der gegenüberliegenden Seite ausgebildet sein, sodass sich eine insgesamt dachförmige Kontur ergibt.

Eine optionale Unterbrechung 10.1 dieser dachförmigen Kontur kann zwischen der dachförmigen Kontur und der Schneide 12 vorgesehen sein. Alternativ ist es denkbar, dass eine angeschrägte Fläche der Schneide 12 ohne Unterbrechung direkt in die dachförmige Kontur, gebildet aus den Schrägen 10 des Sägeblattkörpers 2, übergeht.

In der Schnittdarstellung der Fig. 3 ist zu erkennen, dass der Sägeblattkörper 2 im Umfangsbereich 5 in seiner Dicke D1 gegenüber der Dicke D im nicht dickenreduzierten Bereich reduziert ist. Dabei betragen die Tiefen T1, T2 der Ausnehmungen 6.1, 6.2 jeweils weniger als ein Drittel der Dicke D des Sägeblattkörpers 2 in einem Bereich außerhalb des Umfangsbereichs 5. Der dickenreduzierte Bereich weist vorzugsweise eine Dicke D1 zwischen 25% und 90 % der Dicke D des nicht dickenreduzierten Bereichs auf.

Weiterhin ist zu erkennen, dass auch die Schneide 12 Flächen 13, 14 aufweist, die zueinander dachförmig geneigt sind. Der Schneidenüberstand 15 gegenüber dem Sägeblattkörper 2 im nicht dickenreduzierten Bereich beträgt mehr als 0 mm und bis zu 1,0 mm.

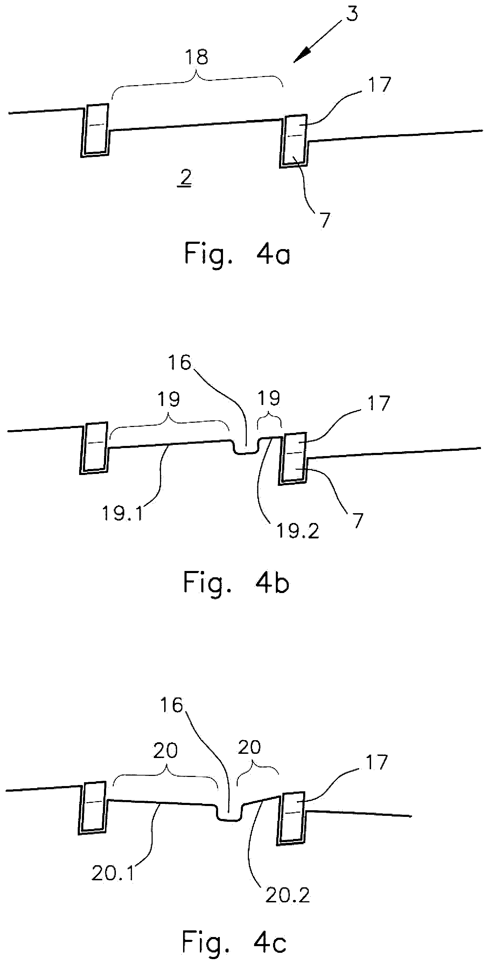

Bei der in der Fig. 4a dargestellten Ausführungsform weist der Sägeblattkörper 2 in der Dicke reduzierte Taschen 7 nicht über die gesamte Länge eines Schneidenzahns 3 auf, sondern lediglich im Bereich einer Schneide 17. Der taschenartige dickenreduzierte Bereich befindet sich somit unmittelbar unterhalb der Schneide 17 und ausschließlich in diesem Bereich. Bei dem gezeigten Ausführungsbeispiel weist der Zahnrücken 18 eine durchgehende geradlinige Kontur auf.

Im Gegensatz dazu weist bei der Ausführungsform gemäß der Fig. 4b der Zahnrücken 19 eine u-förmige Einkerbung 16 auf, die als Schleif- oder Erodierwerkzeugauslaufzone bei der Umfangsbearbeitung der Schneide 17 dient. Auch in diesem Fall ist eine Tasche 7 ausschließlich im Bereich der Schneide 17 vorgesehen.

Bei der Ausführungsform gemäß der Fig. 4c weist der Zahnrücken 20 ebenfalls eine u-förmige Einkerbung 16 auf, die als Schleif- oder Erodierwerkzeugauslaufzone bei der Umfangsbearbeitung der Schneide 17 dient. Dabei weist der Zahnrücken 20 zwei geradlinige Abschnitte 20.1, 20.2 auf, die jedoch nicht parallel zueinander verlaufen. Im Gegensatz dazu verlaufen die Abschnitte 19.1, 19.2 des Zahnrückens 19 parallel zueinander. Insbesondere wird die Umfangskontur, die durch den Abschnitt 19.1 gebildet wird, durch den Abschnitt 19.2 geradlinig fortgesetzt. Sowohl die Abschnitte 19.1, 19.2 als auch die Abschnitte 20.1, 20.2 könnten auch als gekrümmte Linienteile ausgebildet sein. Weiterhin ist es denkbar, dass lediglich einer der Abschnitte 19.1, 19.2, 2D.1, 20.2 geradlinig ausgeführt ist und der jeweils andere Abschnitt des Zahnrückens 19, 20 gekrümmt ausgeführt ist.

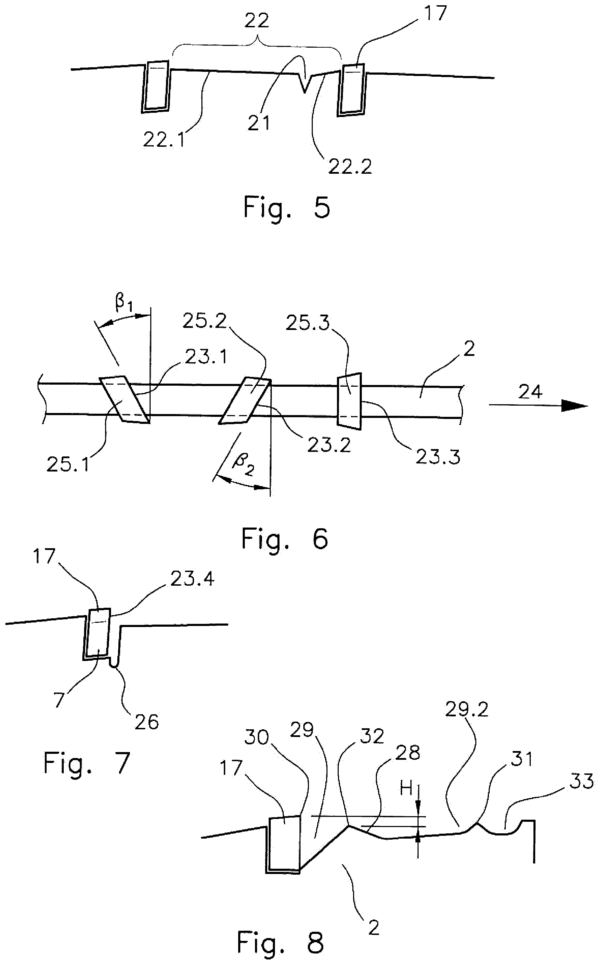

Die Ausführungsform gemäß der Fig. 5 unterscheidet sich von der Ausführungsform gemäß der Fig. 4c dadurch, dass anstatt einer u-förmigen Einkerbung 16 eine v-förmige Einkerbung 21 des Zahnrückens 22 vorgesehen ist. Hierbei verläuft der Abschnitt 22.1 des Zahnrückens 22 geradlinig. Auch der Abschnitt 22.2 verläuft geradlinig, jedoch in einem anderen Winkel als der Abschnitt 22.1. Die Abschnitte 22.1, 22.2 verlaufen demnach nicht parallel. Insbesondere ist zu erkennen, dass der Abschnitt 22.2, der sich unmittelbar an die Schneide 17 anschließt, einen steileren Winkel aufweist als der Abschnitt 22.1.

Bei der Draufsicht der Fig. 6 ist zu erkennen, dass die Schneiden 25.1 bis 25.3 Frontflächen 23.1 bis 23.3 aufweisen, die unterschiedliche Winkel zur Sägeblattmittenebene bzw. zur Bewegungsrichtung 24 aufweisen. Insbesondere sind die Frontflächen 23.1, 23.2 jeweils um einen Winkel β1 bzw. β2, der auch als Achswinkel bezeichnet wird, geneigt, wobei die Frontflächen 23.1, 23.2 abwechselnd nach links oder nach rechts geneigt sind. Die Frontfläche 23.3 ist dagegen nicht geneigt. Die Ausrichtung der Frontflächen 23.1 bis 23.3 kann abwechselnd nach links und nach rechts sein. Weiterhin ist es denkbar, dass alle Frontflächen 23.1 bis 23.3 nach links weisen oder alle Frontflächen 23.1 bis 23.3 nach rechts weisen. Auch sind beliebige Kombinationen und periodische Wiederholungen von nach links und rechts geneigten oder auch nicht geneigten Frontflächen 23.1 bis 23.3 denkbar.

Ausweislich der Fig. 7 ist unmittelbar unten vor der Frontfläche 23.4 der Schneide 17 eine Vertiefung 26 vorgesehen, die als Zuführraum der an der Frontfläche 23.4 entstehenden Späne in die unterhalb der Schneide 17 angebrachten seitlichen Dickenreduzierungen bzw. Taschen dienen. Die Vertiefung 26 kann halbkreisförmig, u-förmig oder v-förmig ausgeführt sein.

Bei der Ausführungsform gemäß der Fig. 8 ist vor der Schneide 17 eine ansteigende Kontur 28 vor einer nachfolgenden Aussparung 29 vorgesehen. Alternativ oder zusätzlich kann hinter einer Schneide 17 am in Bewegungsrichtung des Sägeblatts vorn liegenden Teil eine u- oder v-förmige Einkerbung 33 vorgesehen sein, an die sich eine ansteigende Kontur 29.2 anschließt. Der Abstand H zwischen der höchsten Erhebung 30 einer Schneide 17 und der höchsten Erhebung 31, 32 des Sägeblattkörpers 2 beträgt vorzugsweise mehr als 0 mm und bis zu 1,1 mm.

Die Konturen 28, 29.2 stellen eine Art Spanleitstufe dar. Sie dienen dazu, Späne des vorhergehenden Zahns aus dem Umfangsbereich in den seitlichen dickenreduzierten Bereich abzuleiten. Außerdem dienen sie als zusätzliche Spandickenbegrenzung, entsprechend der Höhe H.

## Patentansprüche

1. Sägeblatt (1) mit einem Sägeblattkörper (2) und mehreren regelmäßig oder unregelmäßig entlang eines Zahnträgerbereichs (5) des Sägeblatts verteilten Schneidenzähnen (3), in dem unterhalb der Schneidenzähne (3) die Dicke des Sägeblattkörpers (2) gegenüber dem übrigen Sägeblattkörper (2) reduziert ist, in dem der Sägeblattkörper (2) einseitig oder beidseitig zumindest abschnittsweise eine kreisringförmige Absetzung (6) aufweist, wobei der dickenreduzierte Zahnträgerbereich (5) als Spanraum dient und in dem Zahnträgerbereich (5) mit reduzierter Dicke des Sägeblattkörpers (2) Flächen vorgesehen sind, die gegenüber einer Sägeblattmittenebene geneigt sind, sodass der Zahnträgerbereich mit zur Sägeblattmitte hin zunehmender Dicke des Sägeblattkörpers ausgeführt ist und/oder in dem Zahnträgerbereich (5) mit reduzierter Dicke des Sägeblattkörpers (2) Flächen vorgesehen sind, die parallel zu einer Sägeblattmittenebene ausgerichtet sind, wobei an den Schneidenzähnen Schneiden (4, 12) angeordnet sind, **dadurch gekennzeichnet, dass** der seitliche Schneidenüberstand (15) zwischen mehr als 0 und 1,0 mm gegenüber dem Sägeblattkörper, der nicht in der Dicke reduziert ist, beträgt.

2. Sägeblatt nach Anspruch 1, **dadurch gekennzeichnet, dass** der Sägeblattkörper (2) zumindest abschnittsweise unterhalb der Schneidenzähne (3) einseitig oder beidseitig einzelne Taschen (7) aufweist, sodass der Sägeblattkörper (2) im Bereich der Taschen (7) eine geringere Dicke aufweist.

3. Sägeblatt nach einem der vorhergehenden Ansprüche, **dadurch gekennzeichnet, dass** die Breite (B) des dickenreduzierten Zahnträgerbereichs (5) bis zu einem Drittel des Sägeblattdurchmessers beträgt.

4. Sägeblatt nach einem der vorhergehenden Ansprüche, **dadurch gekennzeichnet, dass** die Dicke des Sägeblattkörpers im Zahnträgerbereich (5) größer ist als ein Drittel der Dicke des Sägeblattkörpers (2) außerhalb des Zahnträgerbereichs (5).

5. Sägeblatt nach einem der vorhergehenden Ansprüche, **dadurch gekennzeichnet, dass** die Flächen auf sich bezüglich einer Sägeblattmittenebene gegenüberliegenden Seiten zur Sägeblattmittenebene asymmetrisch ausgeführt sind.

6. Sägeblatt nach einem der vorhergehenden Ansprüche, **dadurch gekennzeichnet, dass** am Umfang oder Rand des Sägeblatts (1) Schrägen oder Fasen (10) vorgesehen sind.

7. Sägeblatt nach einem der vorhergehenden Ansprüche, **dadurch gekennzeichnet, dass** die Schrägen oder Fasen (10) sich in durchgehenden Linien- oder Flächenverläufen bis in den Sägeblattkörper (2) erstrecken.

8. Sägeblatt nach einem der vorhergehenden Ansprüche, **dadurch gekennzeichnet, dass** sich die Schrägen oder Fasen (10) bis in den nicht dickenreduzierten Bereich erstrecken.

9. Sägeblatt nach einem der vorhergehenden Ansprüche, **dadurch gekennzeichnet, dass** sich eine am Außenumfang oder Rand des Sägeblatts (1) vorgesehene Schräge oder Fase (10) bis hinter eine Schneide (12) des nächstliegenden Schneidenzahns (3) erstreckt.

10. Sägeblatt nach einem der vorhergehenden Ansprüche, **dadurch gekennzeichnet, dass** der Außenumfang oder Rand des Sägeblatts (1) eine, insbesondere u-förmige oder v-förmige, Einkerbung (16, 21) aufweist.

11. Sägeblatt nach einem der vorhergehenden Ansprüche, **dadurch gekennzeichnet, dass** die Frontflächen (23.1 - 23.3) der Schneidenzähne (3) oder der Schneiden (4, 12, 17) einen Achswinkel β im Bereich 0 < β < 45 ° aufweisen.

12. Sägeblatt nach einem der vorhergehenden Ansprüche, **dadurch gekennzeichnet, dass** der Sägeblattkörper (2) unmittelbar vor zumindest einem Schneidenzahn (3) oder zumindest einer Schneide (4, 12, 17) eine Vertiefung (26) aufweist.

## Claims

1. Saw blade (1) having a saw blade body (2) and a plurality of cutting teeth (3) distributed regularly or irregularly along a tooth-bearing region (5) of the saw blade, in which tooth-bearing region (5) below the cutting teeth (3) the thickness of the saw blade body (2) is reduced compared with the remainder of the saw blade body (2), the saw blade body (2) having on one side or on both sides, at least in sections, a circular indentation (6), wherein the tooth-bearing region (5) of reduced thickness serves as a swarf space and wherein in the tooth-bearing region (5) of reduced thickness of the saw blade body (2) areas are provided which are inclined with respect to a saw blade centre plane such that the tooth-bearing region is embodied with increasing thickness of the of the saw blade body towards the saw blade center and/or in the tooth-bearing region (5) of reduced thickness of the saw blade body (2) areas are provided which are aligned parallel to a saw blade centre plane, wherein cutting edges (4, 12) are arranged on the cutting teeth, **characterised in that** the lateral cutting edge overhang (15) is between more than 0 and 1.0 mm with respect to the saw blade body which is not reduced in thickness.

2. Saw blade according to claim 1, **characterised in that** the saw blade body (2) has, at least in sections, below the cutting teeth (3) on one side or on both sides individual pockets (7), so that the saw blade body (2) has a lower thickness in the region of the pockets (7).

3. Saw blade according to one of the preceding claims, **characterised in that** the width (B) of the tooth-bearing region (5) of reduced thickness is up to one third of the saw blade diameter.

4. Saw blade according to one of the preceding claims, **characterised in that** the thickness of the saw blade body in the tooth-bearing region (5) is greater than one third of the thickness of the saw blade body (2) outside the tooth-bearing region (5).

5. Saw blade according to one of the preceding claims, **characterised in that** the areas on opposite sides with respect to a saw blade centre plane are configured asymmetrically with respect to the saw blade centre plane.

6. Saw blade according to one of the preceding claims, **characterised in that** chamfers or bevels (10) are provided on the circumference or boundary of the saw blade (1).

7. Saw blade according to one of the preceding claims, **characterised in that** the chamfers or bevels (10) extend in continuous line or area courses into the saw blade body (2).

8. Saw blade according to one of the preceding claims, **characterised in that** the chamfers or bevels (10) extend into the region which is not of reduced thickness.

9. Saw blade according to one of the preceding claims, **characterised in that** a chamfer or bevel (10) provided on the outer circumference or boundary of the saw blade (1) extends to behind a cutting edge (12) of the next cutting tooth (3).

10. Saw blade according to one of the preceding claims, **characterised in that** the outer circumference or the boundary of the saw blade (1) has a notch (16, 21), which in particular is u-shaped or v-shaped.

11. Saw blade according to one of the preceding claims, **characterised in that** the front faces (23.1 - 23.3) of the cutting teeth (3) or of the cutting edges (4, 12, 17) can have an axial angle β in the range of 0 < β < 45°.

12. Saw blade according to one of the preceding claims, **characterised in that** the saw blade body (2) has a hollow (26) directly before at least one cutting tooth (3) or at least one cutting edge (4, 12, 17).

## Revendications

1. Lame de scie (1) comportant un corps de lame de scie (2) et plusieurs dents tranchantes (3) réparties régulièrement ou irrégulièrement le long d'une zone porte-dents (5) de la lame de scie,
dans laquelle
au-dessous des dents tranchantes (3), l'épaisseur du corps de lame de scie (2) est réduite par rapport au reste du corps de lame de scie (2),
le corps de lame de scie (2) présente sur un côté ou sur les deux côtés au moins localement un décrochement (6) en forme d'anneau circulaire,
la zone porte-dents (5) d'épaisseur réduite sert d'espace à copeaux, et des surfaces sont prévues dans la zone porte-dents (5) d'épaisseur réduite du corps de lame de scie (2), qui sont inclinées par rapport à un plan médian de la lame de scie, de sorte que la zone porte-dents est réalisée avec une épaisseur du corps de lame de scie qui augmente vers le centre de la lame de scie, et/ou
des surfaces sont prévues dans la zone porte-dents (5) d'épaisseur réduite du corps de lame de scie (2), qui sont orientées parallèlement à un plan médian de la lame de scie,
des tranchants (4, 12) étant agencés sur les dents tranchantes,
**caractérisée en ce que**
le dépassement latéral (15) des tranchants est compris entre plus de 0 et 1,0 mm par rapport au corps de lame de scie qui n'est pas réduit en épaisseur.

2. Lame de scie selon la revendication 1,
**caractérisée en ce que**
au moins localement au-dessous des dents tranchantes (3), le corps de lame de scie (2) présente sur un côté ou sur les deux côtés des poches individuelles (7), de sorte que le corps de lame de scie (2) présente une épaisseur plus petite dans la zone des poches.

3. Lame de scie selon l'une des revendications précédentes,
**caractérisée en ce que**
la largeur (B) de la zone porte-dents (5) d'épaisseur réduite s'élève jusqu'à un tiers du diamètre de la lame de scie.

4. Lame de scie selon l'une des revendications précédentes,
**caractérisée en ce que**
l'épaisseur du corps de lame de scie dans la zone porte-dents (5) est supérieure à un tiers de l'épaisseur du corps de lame de scie (2) à l'extérieur de la zone porte-dents (5).

5. Lame de scie selon l'une des revendications précédentes,
**caractérisée en ce que**
sur des côtés opposés par rapport à un plan médian de la lame de scie, les surfaces sont réalisées de façon asymétrique par rapport au plan médian de la lame de scie.

6. Lame de scie selon l'une des revendications précédentes,
**caractérisée en ce que**
des biseaux ou des chanfreins (10) sont prévus à la périphérie ou au bord de la lame de scie (1).

7. Lame de scie selon l'une des revendications précédentes,
**caractérisée en ce que**
les biseaux ou les chanfreins (10) s'étendent avec des allures linéaires ou surfaciques continues jusque dans le corps de lame de scie (2).

8. Lame de scie selon l'une des revendications précédentes,
**caractérisée en ce que**
les biseaux ou les chanfreins (10) s'étendent jusque dans la zone d'épaisseur non réduite.

9. Lame de scie selon l'une des revendications précédentes,
**caractérisée en ce que**
un biseau ou un chanfrein (10) prévu à la périphérie extérieure ou au bord de la lame de scie (1) s'étend jusqu'en arrière d'un tranchant (12) de la dent tranchante (3) suivante.

10. Lame de scie selon l'une des revendications précédentes,
**caractérisée en ce que**
la périphérie extérieure ou le bord de la lame de scie (1) présente une échancrure en particulier en forme de U ou de V (16, 21).

11. Lame de scie selon l'une des revendications précédentes,
**caractérisée en ce que**
les surfaces frontales (23.1 - 23.3) des dents tranchantes (3) ou des tranchants (4, 12, 17) présentent un angle d'axe β dans la plage de 0<β<45°.

12. Lame de scie selon l'une des revendications précédentes,
**caractérisée en ce que**
le corps de lame de scie (2) présente une cavité (26) directement en avant d'au moins une dent tranchante (3) ou d'au moins un tranchant (4, 12, 17).
